# EUROPÄISCHE PATENTSCHRIFT

(11) **EP 2 155 433 B1**
(45) Veröffentlichungstag und Bekanntmachung des Hinweises auf die Patenterteilung: **28.09.2011**
(21) Anmeldenummer: 08717996.6
(22) Anmeldetag: 19.03.2008
(51) Int. Cl.: B23Q 9/00, B23D 51/02, B27B 11/02, B27C 5/10

(54) **HANDWERKZEUGMASCHINENANORDNUNG MIT FÜHRUNGSCHIENEN**
HAND TOOL ARRANGEMENT WITH GUIDE RAILS
DISPOSITIF DE MACHINE-OUTIL MANUEL AVEC DES RAILS DE GUIDAGE

(30) Priorität: 07.05.2007 DE 102007021334
(43) Veröffentlichungstag der Anmeldung: 24.02.2010
(73) Patentinhaber: Robert Bosch GmbH, 70442 Stuttgart (DE)
(72) Erfinder: RAFF, Thomas, 72135 Dettenhausen (DE); GAIRING, Juergen, 70195 Stuttgart (DE); WEBER, Steffen, 70794 Filderstadt (DE)
(86) Internationale Anmeldenummer: PCT/EP2008/053268
(87) Internationale Veröffentlichungsnummer: WO 2008/135307

(56) Entgegenhaltungen:
- EP-A- 1 279 467
- DE-A1-102004 017 420
- US-A- 4 574 671
- US-A- 5 740 847

## Beschreibung

Die Erfindung betrifft eine Elektrohandwerkzeugmaschinenanordnung, insbesondere Elektrokreissägenanordnung, Elektrooberfräsenanordnung oder Elektrostichsägenanordnung oder dergleichen, nach Oberbegriff des Anspruchs 1.

### Stand der Technik

Von Elektrohandwerkzeugmaschinenanordnungen, insbesondere solchen, die eine Elektrokreissäge, Elektrooberfräse, Elektrostichsäge oder dergleichen Elektrohandwerkzeuge aufweisen, ist aus dem Stand der Technik bekannt, diese für längere Geradschnitte mit einer Führungsschiene zu versehen, die eine Längsführung für ein Längsverschieben der Elektrohandwerkzeugmaschine zur Bewirkung eines geraden Schnittes bewirkt. Beispielsweise ist aus der DE 10 2004 017 420 A1 ein Elektrohandwerkzeug, nämlich insbesondere Handkreissäge, mit einer auf das zu bearbeitende Werkstück auflegbare Führungsschiene bekannt, bei der in einer massiv ausgeführten Führungsschiene eine T-Längsnut eingebracht ist, in die ein an dem Elektrohandwerkzeug befestigter Nutstein eingreift. Hieran ist nachteilig, dass die Führungsschiene relativ massiv ausgebildet sein muss. Sie ist dadurch insbesondere durch ihr Gewicht und die massive Ausführung unhandlich in der Handhabung. Sie ist ferner ausschließlich für solche Elektrohandwerkzeugmaschinen geeignet, die den entsprechenden Nutstein aufnehmen oder aufweisen. Aus der DE 102 51 578 B3 ist eine Führungsschiene für Handwerkzeugmaschinen bekannt, die Anschlagstücke aufweist, die von der Tragplatte in Längsrichtung und in Höhenrichtung wirksame Anschläge bilden. Auch diese ist massiv und einstückig ausgeführt. Hierbei ist insbesondere wiederum die schwergewichtige und in insbesondere Längserstreckung unhandliche Ausführung nachteilig.

### Offenbarung der Erfindung

Dem gegenüber ist erfindungsgemäß eine Elektrohandwerkzeugmaschinenanordnung, insbesondere Elektrokreissägenanordnung, Elektrooberfräsenanordnung oder Elektrostichsägenanordnung oder dergleichen vorgeschlagen, mit einer Elektrohandwerkzeugmaschine und mit mindestens einer auf ein zu bearbeitendes Werkstück auflegbaren oder aufspanbaren Führungsschiene sowie mit einer Längsführung für ein Längsverschieben der Elektrohandwerkzeugmaschine auf der Führungsschiene. Dabei ist vorgesehen, dass die Führungsschiene mindestens eine randoffene Ausnehmung aufweist, in der sich eine Berippung befindet. Anders als im Stand der Technik wird die Führungsschiene folglich nicht als massives Bauteil, das insbesondere aus dem vollen Material hergestellt, beispielsweise gefräst ist, hergestellt, sondern als Führungsschiene mit einer randoffenen Ausnehmung. Um gleichwohl eine bessere Stabilität zu bewirken, ist eine Berippung vorgesehen. Hierdurch ergibt sich eine erhebliche Materialeinsparung und somit ein deutlich geringeres Gewicht der Führungsschiene und eine erheblich verbesserte Handhabbarkeit.

Die Berippung weist Rippen auf, von denen insbesondere mindestens eine als Längsrippe und/oder als Querrippe und/oder als Diagonalrippe ausgebildet ist. Eine Längsrippe ist hierbei eine solche, die der Längserstreckung der Führungsschiene folgt, eine Querrippe eine solche, die im Wesentlichen quer, insbesondere nämlich rechtwinklig zu einer Längsrippe beziehungsweise zur Längsrestreckung ausgerichtet ist, und eine Diagonalrippe eine solche, die entweder zwischen Ecken der Führungsschiene oder aber zwischen Ecken verläuft, die von Längsrippen und Querrippen ausgebildet werden, also im Wesentlichen im 45-Grad-Winkel zu Längsrippen und/oder Querrippen verlaufen. Insbesondere ist es auch möglich, mehrere gleichartige oder unterschiedliche Rippen in der Ausnehmung vorzusehen und zu kombinieren, um die gewünschte, für den jeweiligen Einsatzzweck und/oder die jeweilige Länge der Führungsschiene gewünschte Verbindungssteifigkeit zu bewirken.

Mehrere Rippen sind vorgesehen, die über Kreuzungsstellen miteinander verbunden sind. Es werden folglich die vorstehend beschriebenen Rippen zumindest bereichsweise kombiniert, so dass beispielsweise Längsrippen und Querrippen oder Querrippen und Diagonalrippen oder Längsrippen, Querrippen und Diagonalrippen vorgesehen werden, wobei diese über Kreuzungsstellen miteinander verbunden sind, also insbesondere auch einstückig ineinander übergehen, zumindest jedoch form- und/oder kraftschlüssig mit einander verbunden sind. Mit relativ geringem Aufwand und geringer Rippenstärke lässt sich hierdurch eine vorzügliche Verbindungssteifigkeit über die gesamte Erstreckung der Führungsschiene erreichen.

Mindestens zwei Führungsschienen sind vorgesehen, die mit Steckmitteln der Länge nach miteinander verbindbar sind. An den aus dem Stand der Technik bekannten Führungsschienen ist nachteilig, dass diese einstückig über ihre gesamte, meist erhebliche Länge ausgebildet sind. Sie sind demzufolge separat zu der Elektrohandwerkzeugmaschine, mit der sie eingesetzt werden sollen, zu transportieren. Erfindungsgemäß hingegen sind mindestens zwei Führungsschienen vorgesehen, die beispielsweise eine solche Länge aufweisen, dass sie zusammen mit der Elektrohandwerkzeugmaschine, mit der sie eingesetzt werden sollen, in einer Verpackungseinheit, beispielsweise einem Maschinenkoffer, transportiert werden können. Um eine zur Ausführung von Arbeiten und Längsschnitten erforderliche Führungsschienenlänge zu bewirken, sind die Führungsschienen mit Steckmitteln der Länge nach miteinander verbindbar. Es sind folglich Steckmittel vorgesehen, die es gestatten, mehrere Führungsschienen miteinander zu verbinden. Hierbei ist insbesondere auch vorgesehen, dass die Führungsschiene beliebig verlängerbar ist, also keine konstruktive Maximallänge aufweist.

In einer weiteren Ausführungsform ist vorgesehen, dass sich die Ausnehmung auf der Rückseite der Führungsschiene befindet. Die Führungsschiene kann demzufolge als ein länglicher, rechteckiger, im weitesten Sinne eine Wannenform ausbildender Körper gesehen werden, wobei sich die Ausnehmung (also gewissermaßen die Öffnung der Wanne) auf der Rückseite der Führungsschiene befindet. Mit Rückseite ist der Bereich der Führungsschiene gemeint, der auf das Werkstück aufgelegt wird. Die Berippung wird hierbei bevorzugt innerhalb der Ausnehmung angeordnet und sorgt im Zusammenhang mit Seitenwänden der Führungsschiene für eine dem vorgesehenen Gebrauch entsprechende Verbindungssteifigkeit der Führungsschiene.

In einer bevorzugten Ausführungsform sind die Steckmittel als mindestens ein Vorsprung und als mindestens eine den Vorsprung aufnehmende Steckvertiefung ausgebildet. An einem Ende der Führungsschiene ist demzufolge ein Vorsprung ausgebildet, der als Steckmittel in mindestens eine ihn aufnehmende Steckvertiefung an einer anderen Führungsschiene eingreift. Hierbei wird eine form-/kraftschlüssige Verbindung hergestellt, so dass die Führungsschienen sich nicht ohne Weiteres voneinander lösen können. Die Längsführung wird hierbei linear und unterbrechungsfrei fortgesetzt, so dass die Elektrohandwerkzeugmaschine ohne Weiteres von einer Führungsschiene auf die nächste gleitet und ohne Unterbrechung geführt wird.

In einer bevorzugten Ausführungsform ist mindestens eine Schnappverbindung vorgesehen oder mindestens ein Steckmittel bildet eine Schnappverbindung aus. Eine Schnappverbindung ist hierbei jede Verbindung, bei der ein Verbindungselement in ein anderes dergestalt eingreift, dass es beispielsweise hakenförmig mit einem Vorsprung in eine hierzu korrespondierende Ausnehmung eingreift, wobei zum Lösen der Schnappverbindung eine Betätigung des Hakens oder eines entsprechenden Mittels erforderlich ist, beispielsweise ein Rückbiegen oder Wegbiegen eines Teiles der Schnappverbindung, insbesondere des Hakens, von der Aussparung.

In einer weiteren, bevorzugten Ausführungsform befindet sich der Vorsprung auf einer Stirnseite der Führungsschiene und die Steckvertiefung auf der anderen Seite der Führungsschiene. Auf diese Weise ist ein beliebiges Aneinanderreihen und Verlängern von Führungsschienen möglich, ohne dass konstruktiv dem beliebigen Verlängern Hindernisse entgegenstünden.

In einer weiteren Ausführungsform ist vorgesehen, dass die Längsseiten der Führungsschiene mit einem Spanreissschutz versehen sind. Insbesondere ist hierbei vorgesehen, dass der Spanreissschutz auf beiden Längsseiten der Führungsschiene angeordnet ist, und zwar bevorzugt symmetrisch zu der

Führung, die bevorzugt aus einer Führungsrippe gebildet wird. Es ist hierbei folglich möglich, die Elektrohandwerkzeugmaschinenanordnung mit dem Schnittbereich der Elektrohandwerkzeugmaschine auf der einen, aber auch auf der anderen Seite einzusetzen. Insbesondere kann auf diese Weise, beispielsweise mit einer Elektrokreissäge, die eine Längsseite der Führungsschiene für Geradschnitte verwendet werden, wobei der Spanreissschutz an dieser einen Längsseite auf den Abstand des Sägeblattes zu einer Längswandung der Führungsschiene eingestellt ist, was insbesondere durch Wegsägen oder Ansägen beim erstmaligen Gebrauch des Spanreissschutzes bewirkt wird, so dass immer eine sehr gute Anlage des Spanreisschutzes mit hervorragender Passung gewährleistet ist, und die andere Längsseite für Schrägschnitte verwendet wird, wobei der Spanreissschutz hierbei auf den Abstand des hierzu nun verschwenkten Sägeblattes zu der entsprechenden Seitenwandung der Führungsschiene eingestellt ist. Der Spanreissschutz kann hierbei beispielsweise aus Gummi oder einem anderen elastischen Material bestehen und insbesondere als lösbares, ersetzbares Teil ausgebildet sein. Ist die Führungsrippe asymmetrisch auf/an der Führungsschiene angeordnet (also nicht längsmittig), ergibt sich bereits durch einfaches Wenden der Führungsschiene (also zum Gebrauch einmal der einen, dann der anderen Längsseite) ein unterschiedlicher Abstand des nicht verschwenkten Sägeblattes zu den Längsseiten der Führungsschiene. Dies ist insbesondere bei verschwenktem Sägeblatt vorteilhaft (für Gehrungsschnitte), da durch den zunächst (unverschwenkt) größeren Abstand des Sägeblattes zur Führungsschiene eine Annäherung des Sägeblattes durch Verschwenkung gewissermaßen ausgeglichen wird; der Eintauchpunkt des Sägeblattes oberseitig des Schnittgutes liegt hierbei ebenfalls benachbart zur Führungsschiene, so dass sich bereits hieraus ein guter Spanreissschutz ergibt. Hierdurch ist auch verhindert, dass versehentlich in die Führungsschiene gesägt wird.

In einer weiteren Ausführungsform befindet sich auf der Unterseite der Schiene eine Anti-Rutsch-Auflage. Diese wird bevorzugt aus einem elastischen Material, beispielsweise aus Gummi oder einem Elastomer gebildet, und bewirkt, dass die Führungsschiene auch ohne mechanische Verspannung auf dem Werkstück nicht weggleitet. Die Anti-Rutsch-Auflage kann hierbei beispielsweise die Berippung mehr oder minder vollständig verdecken oder als abschnittsweise, flächige Auflage vorgesehen sein. Dadurch, dass die Krafteinwirkung im Regelfall in Längserstreckung der Führungsschiene erfolgt, insbesondere beim Führen der Elektrohandwerkzeugmaschine, ergibt sich bei Verwendung von Gummi oder eines Elastomers in Längserstreckung eine hervorragende Haftung und Sicherung der Führungsschiene gegen Verrutschen.

In einer weiteren, bevorzugten Ausführungsform besteht die Führungsschiene aus einem Kunststoff. Die Führungsschiene ist hierdurch leichtgewichtig und einfach und kostengünstig herstellbar.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels und anhand von Figuren näher erläutert.
- Figur 1: zeigt eine Führungsschiene für eine Elektrohandwerkzeug- maschine in Aufsicht;
- Figur 2: zeigt dieselbe Führungsschiene von ihrer Unterseite und
- Figur 3: zeigt das Zusammenstecken zweier Führungsschienen, von deren Unterseite aus betrachtet.

### Ausführungsform(en) der Erfindung

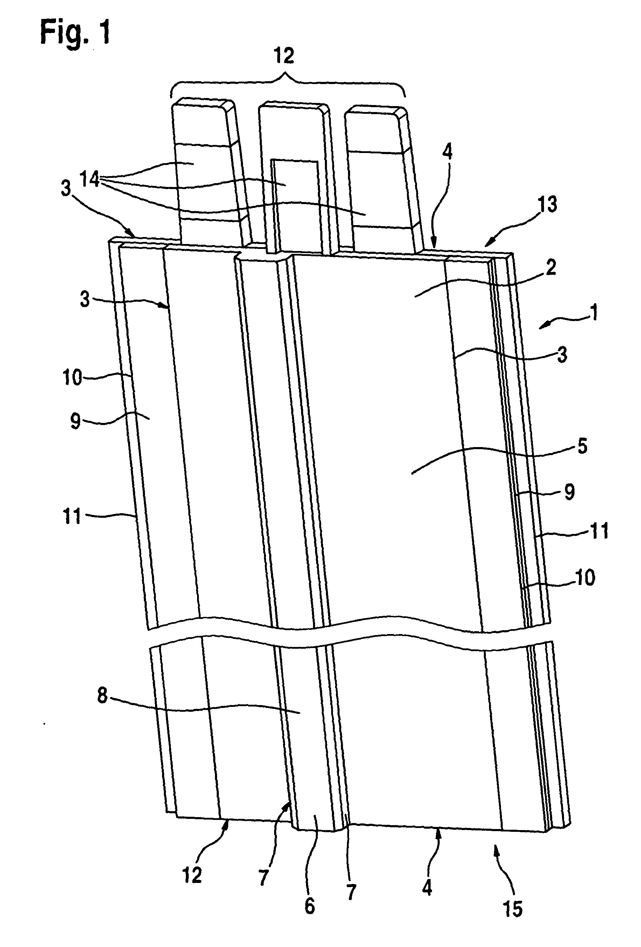

Figur 1 zeigt eine Führungsschiene 1 für eine nicht dargestellte Elektrohandwerkzeugmaschine einer nicht dargestellten Elektrohandwerkzeugmaschinenanordnung. Die Führungsschiene 1 besteht aus einem Führungsschienenkörper 2, der sich gegenüberliegende Längsseiten 3 und - jeweils endseitig - rechtwinklig hierzu angeordnete, sich ihrerseits gegenüberliegende Stirnseiten 4 aufweist. Die Führungsschiene hat in Aufsicht einen rechteckigen Grundriss, wobei zwischen den Längsseiten und Stirnseiten eine Führungsschienenoberseite 5 angeordnet ist. Auf der Führungsschienenoberseite 5 befindet sich, von den Längsseiten 3 ungleich beabstandet, erhaben eine zu den Längsseiten parallele Führungsrippe 6, die ihrerseits im Wesentlichen einen rechteckigen Querschnitt aufweist, wobei sie in Längserstreckung der Führungsschiene 1 von einer Stirnseite 4 zur gegenüberliegenden Stirnseite 4 ununterbrochen ausgebildet ist. Die Führungsrippe 6 weist ihrerseits zu den Längsseiten 3 parallele Rippenseitenwände 7 und eine zumindest im Wesentlichen zur Führungsschienenoberseite 5 parallele Führungsrippenoberseite 8 auf. Auf die Führungsschienenoberseite 5 wird die nicht dargestellte Elektrohandwerkzeugmaschine aufgelegt, wobei die Führungsrippe 6 in formangepasste Ausnehmungen oder mindestens eine formangepasste Ausnehmung, die bevorzugt in Längserstreckung an der Elektrohandwerkzeugmaschine verläuft. Die nicht dargestellte Elektrohandwerkzeugmaschine ist auf diese Weise auf der Führungsschiene 1 im Eingriff der Führungsrippe 6 längsverschieblich, wobei ein seitliches Abweichen der nicht dargestellten Elektrohandwerkzeugmaschine, also eine Bewegung der Elektrohandwerkzeugmaschine nicht in Axial-/Längsrichtung der Führungsschiene 1, sondern quer hierzu, durch die Führungsrippe 6 verhindert wird, die sich im Eingriff der formangepassten Ausnehmung der nicht dargestellten Elektrohandwerkzeugmaschine befindet. An den Längseiten 3 der Führungsschiene 1 ist jeweils ein Spanreissschutz 9 angeordnet. Dieser erstreckt sich parallel der Längsseite 3 von einer Stirnseite 4 zur gegenüberliegenden Stirnseite 4. Der Spanreissschutz 9 besteht bevorzugt aus einem Elastomer oder aus Gummi 10, wobei eine dem jeweiligen Einsatzzweck entsprechende Elastizität vorgesehen ist. Der Spanreissschutz 9 wird beispielsweise bei erstmaliger Verwendung der Führungsschiene 1 mit der nicht dargestellten Elektrohandwerkzeugmaschine, beispielsweise einer Elektrohandkreissäge, angesägt oder zumindest bereichsweise, nämlich in seiner Längserstreckung, abgesägt (nämlich an der der Längsseite 3 der Führungsschiene 1 entfernteren Längskante 11 des Spanreissschutzes 9). Auf diese Weise wird eine zuverlässige und im Wesentlichen bündige Anlage des Spanreissschutzes beispielsweise an dem Kreissägeblatt erreicht, so dass bei Austauchen einzelner Sägezähne des Kreissägeblattes aus dem nicht dargestellten, zu bearbeitenden Werkstück das Ausreißen von Spänen aus dem Werkstück durch die Auflage des Spanreissschutzes 9 auf dem Werkstück verhindert wird. Die Stirnseiten 4 der Führungsschiene 1 weisen zur Verbindung der Führungsschiene 1 mit einer anderen, hier nicht dargestellten, weiteren Führungsschiene 1 Steckmittel 12 auf, die auf der einen, ersten Stirnseite 13 als Vorsprung 14, und auf der anderen, zweiten Stirnseite 15 als Steckvertiefung 16 zur Aufnahme des Vorsprungs 14 einer anderen, zweiten Führungsschiene 1 ausgebildet sind.

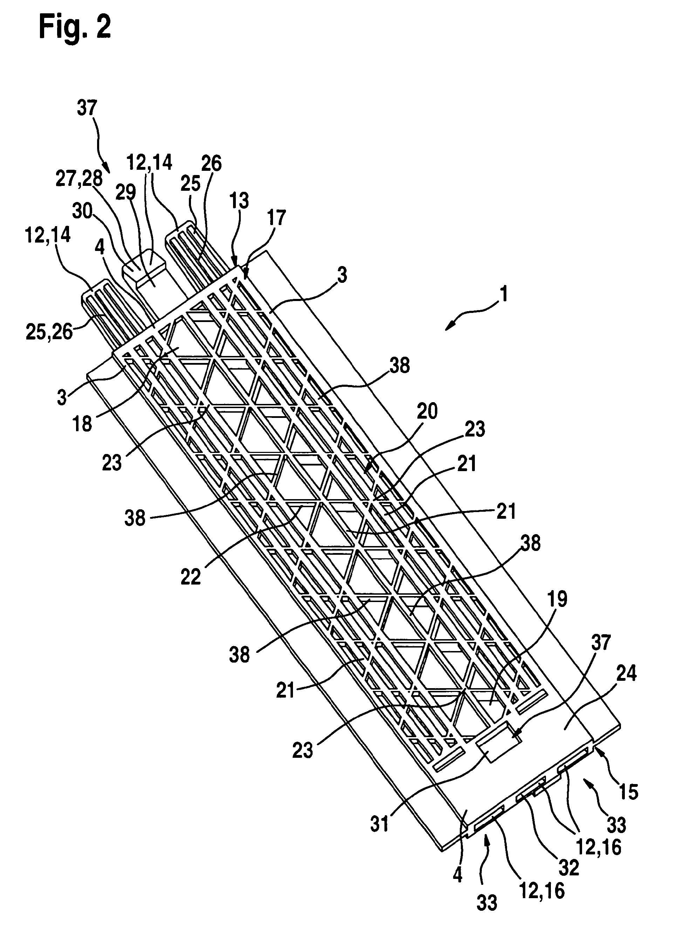

Figur 2 zeigt die Führungsschiene 1 von ihrer Führungsschienenunterseite 17 aus betrachtet zwischen den Längsseiten 3 und den Stirnseiten 4 der Führungsschiene 1 einerseits sowie der diese verbindenden Führungsschienenoberseite 5 (aufgrund der Perspektive hier nur von ihrer Unterseite 18 dargestellt), die zusammen den Führungsschienenkörper 2 der Führungsschiene 1 bilden, ist eine randoffene Ausnehmung 19 angeordnet, die der Führungsschiene 1 das prinzipielle Aussehen eines offenen, flachen Deckels oder einer offenen, flachen rechtwinkligen Schale gibt. In der randoffenen Ausnehmung 19 ist, von einer Längsseite 3 zur anderen Längsseite 3 und von einer Stirnseite 4 zur anderen Stirnseite 4, eine Berippung 20 angeordnet, die aus Rippen 38, nämlich aus Längsrippen 21 und aus Diagonalrippen 22 besteht. Die Längsrippen 21 erstrecken sich hierbei von einer Stirnseite 4 zur gegenüberliegenden Stirnseite 4, während die Diagonalrippen schräg hierzu, beispielsweise in einem Winkel von 45°, angeordnet sind. Die Längsrippen 21 und die Diagonalrippen 22 sind über Kreuzungsstellen 23 miteinander verbunden. Jede Kreuzung einer Längsrippe 21 mit einer Diagonalrippe 22 bildet hierbei eine diese verbindende Kreuzungsstelle 23 aus. Auf diese Weise wird erreicht, dass eine auf die Führungsschiene 1 einwirkende, beispielsweise geometrieverändernde Kraft, über die Diagonalrippen 22 und die Längsrippen 21, die über die Kreuzungsstellen 23 miteinander verbunden sind, und die mit den Längsseiten 3 und den Stirnseiten 4 verbunden sind, aufgenommen wird. Auf diese Weise ergibt sich eine sehr hohe Verwindungssteifigkeit der Führungsschiene 1. Die Berippung 20 wird zusammen mit dem Führungsschienenkörper 2 bevorzugt im Spritzgussverfahren oder einer ähnlichen, geeigneten Herstellungsweise gefertigt, wobei die Führungsschiene 1 bevorzugt aus einem Kunststoff 24 hergestellt ist. Auf der einen, ersten Stirnseite 13 der Führungsschiene 1 sind als Steckmittel 12 drei Vorsprünge 14 ausgebildet, während auf der anderen, zweiten Stirnseite 15 als Steckmittel 12 drei Steckvertiefungen 16 ausgebildet sind. Von den Vorsprüngen 14 sind die beiden außenseitigen Vorsprünge 25 als Führungsvorsprung 26 ausgebildet, während ein mittlerer Vorsprung 27 als Schnapphaken 28 ausgebildet ist. Er weist hierzu an seiner Schnapphakenunterseite 29 einen Hakenvorsprung 30 auf, der in eine ihm formangepasste Hakenausnehmung 31 einer mittleren Steckvertiefung 32 (also der mittleren der drei Steckvertiefungen 16) an der zweiten Stirnseite 15 eingreift. Der Schnapphaken 28 und die Hakenausnehmung 31 bilden so eine Schnappverbindung 37 aus. Die beiden außenseitigen Vorsprünge 25 als Führungsvorsprünge 26 greifen in äußere Steckvertiefungen 33 an der zweiten Stirnseite 15 ein und dienen der Formstabilisierung und Führung der Steckmittel 12.

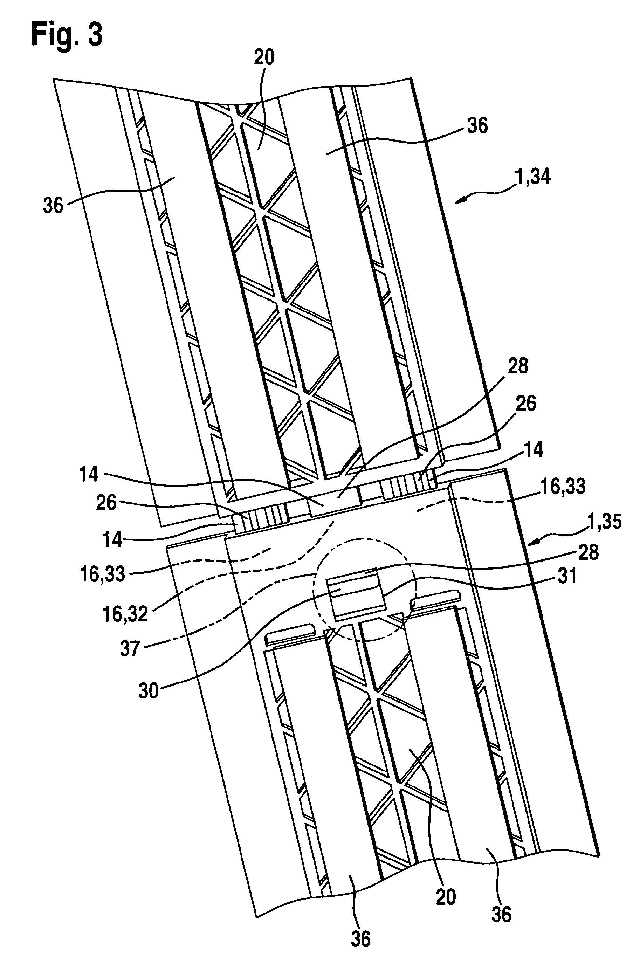

Figur 3 zeigt zwei Führungsschienen 1, nämlich eine erste Führungsschiene 34 und eine zweite Führungsschiene 35 im Moment des Verbundenwerdens. Hierzu sind die Vorsprünge 14 der ersten Führungsschiene 34 in die Steckvertiefungen 16 der zweiten Führungsschiene 35 eingeschoben, wobei die Verbindung noch nicht vollständig geschlossen ist. Die Führungsvorsprünge 26 greifen in äußere Steckvertiefungen 33 der zweiten Führungsschiene 35 ein, während der Schnapphaken 28 in die mittlere Steckvertiefung 32 der zweiten Führungsschiene 35 zur Ausbildung der Schnappverbindung 37 eingreift. Dessen Hakenvorsprung 30 wird bei vollständiger Anlage der ersten Führungsschiene 34 an der zweiten Führungsschiene 35 vollständig in der Hakenausnehmung 31 der zweiten Führungsschiene 35 einrasten und die beiden Führungsschienen 1 auf diese Weise lösbar miteinander verbinden. Das Lösen der Verbindung geschieht durch Eindrücken des Hakenvorsprungs 30 innerhalb der Hakenausnehmung 31, wodurch dessen Rastwirkung aufgehoben wird und die beiden Führungsschienen 1 wieder auseinandergezogen und somit voneinander getrennt werden können.

Zum Schutz vor Verrutschen der Führungsschiene 1 auf einem zu bearbeitenden Werkstück ist die Berippung 20 bei beiden Führungsschienen 1 abschnittsweise mit in Längsrestreckung der Führungsschiene 1 auf der Berippung angeordneten Anti-Rutsch-Auflagen 36 belegt. Die Anti-Rutsch-Auflage 36 besteht hierbei bevorzugt aus einem weichen Elastomer, beispielsweise einem Weichgummi.

## Patentansprüche

1. Handwerkzeugmaschinenanordnung, insbesondere Handkreissägenanordnung, Oberfräsenanordnung oder Stichsägenanordnung oder dergleichen, mit einer Handwerkzeugmaschine und mit mindestens einer auf ein zu bearbeitendes Werkstück auflegbaren oder aufspannbaren Führungsschiene (1) sowie mit einer Längsführung für ein Längsverschieben der Handwerkzeugmaschine auf der Führungsschiene (1), wobei mindestens zwei Führungsschienen (1) vorgesehen sind, die mit Steckmitteln (12) der Länge nach miteinander verbindbar sind, **dadurch gekennzeichnet, dass** die jeweilige Führungsschiene (1) mindestens eine randoffene Ausnehmung (19) aufweist, in der sich eine Berippung (20) befindet, wobei die Berippung (20) aus Längsrippen (21) und Diagonalrippen (22) besteht, wobei sich die Längsrippen (21) von einer Stirnseite zur gegenüberliegenden Stirnseite (4) der Führungsschiene (1) erstrecken, während die Diagonalrippen (22) schräg hierzu angeordnet sind, und wobei die Längsrippen (21) und die Diagonalrippen (22) über Kreuzungsstellen (23) miteinander verbunden sind.

2. Handwerkzeugmaschinenanordnung nach Anspruch 1, **dadurch gekennzeichnet, dass** sich die Ausnehmung (19) auf der Rückseite der Führungsschiene (1) befindet.

3. Handwerkzeugmaschinenanordnung nach einem der vorhergehenden Ansprüche, **dadurch gekennzeichnet, dass** die Steckmittel (12) als mindestens ein Vorsprung (14) und als mindestens eine den Vorsprung (14) aufnehmende Steckvertiefung (16) ausgebildet sind.

4. Handwerkzeugmaschinenanordnung nach einem der vorhergehenden Ansprüche, **dadurch gekennzeichnet, dass** mindestens eine Schnappverbindung (37) vorgesehen ist oder dass mindestens ein Steckmittel (12) eine Schnappverbindung bildet.

5. Handwerkzeugmaschinenanordnung nach einem der vorhergehenden Ansprüche, **dadurch gekennzeichnet, dass** sich der Vorsprung (14) auf einer Stirnseite (4) der Führungsschiene (1) und die Steckvertiefung (16) auf der anderen Seite der Führungsschiene (1) befindet.

6. Handwerkzeugmaschinenanordnung nach einem der vorhergehenden Ansprüche, **dadurch gekennzeichnet, dass** die Längsseiten (3) der Führungsschiene (1) mit einem Spanreissschutz (9) versehen sind.

7. Handwerkzeugmaschinenanordnung nach einem der vorhergehenden Ansprüche, **dadurch gekennzeichnet, dass** sich auf der Unterseite der Führungsschiene eine Anti-Rutsch-Auflage (36) befindet.

8. Handwerkzeugmaschinenanordnung nach einem der vorhergehenden Ansprüche, **dadurch gekennzeichnet, dass** die Führungsschiene (1) aus einem Kunststoff (24) besteht.

## Claims

1. Portable power tool arrangement, in particular portable circular saw arrangement, router arrangement or jigsaw arrangement or the like, comprising a portable power tool and comprising at least one guide rail (1) which can be placed or clamped in place on a workpiece to be machined and comprising a longitudinal guide for a longitudinal displacement of the portable power tool on the guide rail (1), wherein at least two guide rails (1) are provided, which can be connected to one another lengthwise by push-fit means (12), **characterized in that** the respective guide rail (1) has at least one open-edged recess (19) in which ribbing (20) is located, wherein the ribbing (20) consists of longitudinal ribs (21) and diagonal ribs (22), wherein the longitudinal ribs (21) extend from one end face to the opposite end face (4) of the guide rail (1), whereas the diagonal ribs (22) are arranged obliquely thereto, and wherein the longitudinal ribs (21) and the diagonal ribs (22) are connected to one another via intersections (23).

2. Portable power tool arrangement according to Claim 1, **characterized in that** the recess (19) is located on the rear side of the guide rail (1).

3. Portable power tool arrangement according to either of the preceding claims, **characterized in that** the push-fit means (12) are designed as at least one projection (14) and as at least one push-fit recess (16) accommodating the projection (14).

4. Portable power tool arrangement according to one of the preceding claims, **characterized in that** at least one snap connection (37) is provided or **in that** at least one push-fit means (12) forms a snap connection.

5. Portable power tool arrangement according to one of the preceding claims, **characterized in that** the projection (14) is located on one end face (4) of the guide rail (1) and the push-fit recess (16) is located on the other side of the guide rail (1).

6. Portable power tool arrangement according to one of the preceding claims, **characterized in that** the longitudinal sides (3) of the guide rail (1) are provided with an anti-splintering device (9).

7. Portable power tool arrangement according to one of the preceding claims, **characterized in that** an anti-slip coating (36) is located on the underside of the guide rail.

8. Portable power tool arrangement according to one of the preceding claims, **characterized in that** the guide rail (1) is made of a plastic (24).

## Revendications

1. Agencement de machine-outil à main, en particulier agencement de scie circulaire à main, agencement de défonceuse ou agencement de scie sauteuse ou similaire, comprenant une machine-outil à main et au moins un rail de guidage (1) pouvant être serré ou posé sur une pièce à usiner, ainsi qu'un guide longitudinal pour un déplacement longitudinal de la machine-outil à main sur le rail de guidage (1), au moins deux rails de guidage (1) étant prévus, lesquels peuvent être reliés l'un à l'autre suivant leur longueur par des moyens d'enfichage (12), **caractérisé en ce que** le rail de guidage respectif (1) présente au moins un évidement (19) ouvert au bord, dans lequel se trouve un nervurage (20), le nervurage (20) se composant de nervures longitudinales (21) et de nervures diagonales (22), les nervures longitudinales (21) s'étendant depuis un côté frontal jusqu'au côté frontal opposé (4) du rail de guidage (1), tandis que les nervures diagonales (22) sont disposées obliquement par rapport à celui-ci, et les nervures longitudinales (21) et les nervures diagonales (22) étant connectées les unes aux autres par des points d'intersection (23).

2. Agencement de machine-outil à main selon la revendication 1, **caractérisé en ce que** l'évidement (19) se trouve sur le côté arrière du rail de guidage (1).

3. Agencement de machine-outil à main selon l'une quelconque des revendications précédentes, **caractérisé en ce que** les moyens d'enfichage (12) sont réalisés sous forme d'au moins une saillie (14) et d'au moins un renfoncement d'enfichage (16) recevant la saillie (14).

4. Agencement de machine-outil à main selon l'une quelconque des revendications précédentes, **caractérisé en ce qu'**au moins une connexion par encliquetage (37) est prévue, ou **en ce qu'**au moins un moyen d'enfichage (12) constitue une connexion par encliquetage.

5. Agencement de machine-outil à main selon l'une quelconque des revendications précédentes, **caractérisé en ce que** la saillie (14) se trouve sur un côté frontal (4) du rail de guidage (1) et le renfoncement d'enfichage (16) se trouve sur l'autre côté du rail de guidage (1).

6. Agencement de machine-outil à main selon l'une quelconque des revendications précédentes, **caractérisé en ce que** les côtés longitudinaux (3) du rail de guidage (1) sont pourvus d'une protection contre les éclats (9).

7. Agencement de machine-outil à main selon l'une quelconque des revendications précédentes, **caractérisé en ce qu'**un support antidérapant (36) est situé sur le côté inférieur du rail de guidage.

8. Agencement de machine-outil à main selon l'une quelconque des revendications précédentes, **caractérisé en ce que** le rail de guidage (1) se compose d'un plastique (24).
